# EUROPÄISCHE PATENTSCHRIFT

(11) **EP 2 841 694 B1**
(45) Veröffentlichungstag und Bekanntmachung des Hinweises auf die Patenterteilung: **24.07.2019**
(21) Anmeldenummer: 13723397.9
(22) Anmeldetag: 22.04.2013
(51) Int. Cl.: F02F 3/28, F02B 53/02, F01C 1/32, F01C 1/344, F01C 19/00, F01C 9/00

(54) **SCHWINGKOLBENMOTOR MIT VIELECKFÖRMIGEM KOLBEN**
OSCILLATING PISTON ENGINE HAVING A POLYGONAL PISTON
MOTEUR À PISTON OSCILLANT COMPRENANT UN PISTON POLYGONAL

(30) Priorität: 26.04.2012 CH 576122012
(43) Veröffentlichungstag der Anmeldung: 04.03.2015
(73) Patentinhaber: Schnyder, Hermann, 6048 Horw (CH)
(72) Erfinder: Schnyder, Hermann, 6048 Horw (CH)
(74) Vertreter: TSWpat Luzern AG
(86) Internationale Anmeldenummer: PCT/CH2013/000067
(87) Internationale Veröffentlichungsnummer: WO 2013/159239

(56) Entgegenhaltungen:
- WO-A1-2009/022888
- CH-A- 555 470
- US-A- 3 964 442
- US-A- 4 209 001
- US-A1- 2007 215 094

## Beschreibung

Die vorliegende Erfindung bezieht sich auf eine Schwingkolbenmaschine mit vieleckförmigem Kolben. Morphologisch hat die Schwingkolbenmaschine Ähnlichkeit mit dem bekannten Drehkolbenmotor von Wankel, mit dem Unterschied, dass nur die Brennräume funktional sich bewegen. Diese Erfindung ist eine Weiterentwicklung durch den gleichen Erfinder der unter CH 555 470 bekannt gewordenen, so dass der nächstliegende Stand der Technik diese zeitlich voranliegende Patentschrift ist. Im engeren Sinne betrifft die Erfindung einen Schwingkolbenmotor nach dem Oberbegriff des Patentanspruches 1. Das Dokument WO 2009/022888 A1 offenbart einen Schwingkolbenmotor mit einem vieleckförmigen Kolben und mit einem im Axialschnitt des Innenraums regelmäßig polygonalem Gehäuse derselben Form. Anhand der beigefügten Zeichnung wird der Erfindungsgegenstand näher erläutert. Es zeigen
- Fig. 1: eine Schnittzeichnung durch das Motorgehäuse von der Seite der Brennräume her, teilweise geöffnet,
- Fig. 2: dieselbe Schnittzeichnung von der Gegenseite her,
- Fig. 3: einen Axialschnitt durch den Motor,

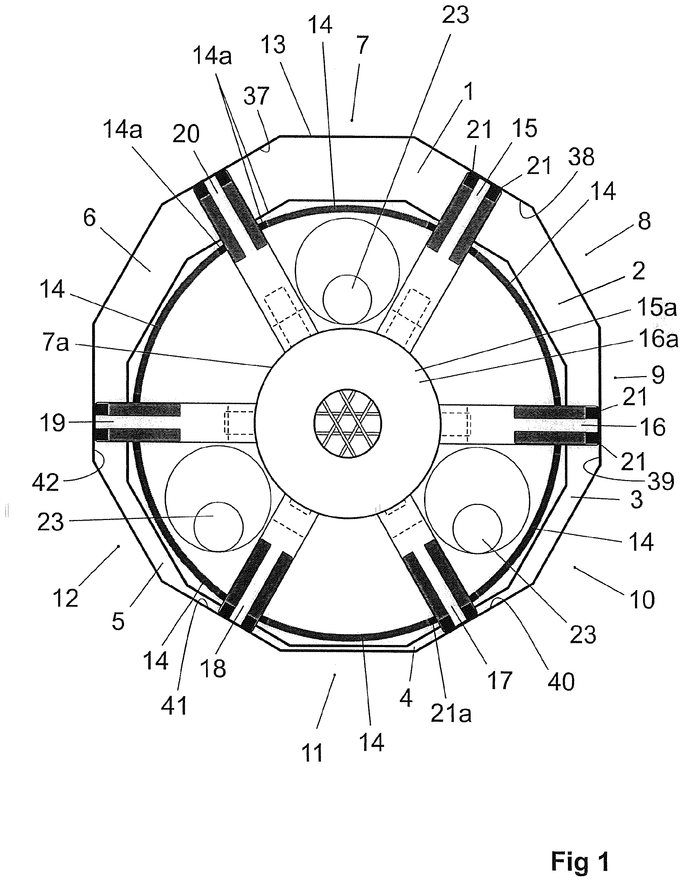

Fig. 1 ist ein Axial-Schnitt durch das Gehäuse des erfindungsgemässen Motors mit Blick in hier sechs Brennräume 1 - 6 des Motors. Jeder der Brennräume 1 - 6 ist begrenzt durch einen Sektor 7 - 12 eines mit 13 bezeichneten Gehäuses des Motors, nach der Innenseite durch Dichtleisten 14, 14a, entsprechend Kolbenringen eines Otto- oder Dieselmotors konventioneller Bauart, von Brennraum zu Brennraum durch einen Teilflügel von Doppelflügeln 15 - 20, bzw. diese abdichtende Dichtleisten 21. Die Enden der Dichtleisten 14, 14a, 21, 21a sind, weil mechanischem Verschleiss unterworfen, beispielsweise gehärtet. Der hier dargestellte Hauptbestandteil, welcher auch die variablen Grössen der Brennräume 1 - 6 bewirkt und definiert, ist ein Kolben 22, welcher durch drei Kurbelwellen 23 parallel geführt, die kreisförmige Oszillation des Kolbens 22 bewirkt, und damit die variablen Grössen der Brennräume 1 - 6 erzeugt.

Diese drei Kurbelwellen 23 sind je mit einem Satellitenrad 46 fest verbunden, welche um ein Sonnenrad 47 rotieren.
An dieser Antriebsseite werden die stark belasteten Kurbellagerungen nach dem Trockensumpf-Druckschmiersystem geschmiert und gekühlt. Das überschüssige Schmieröl wird über eine Rücklaufleitung 49 dem Schmieröl-Kreislauf wieder zugeführt.

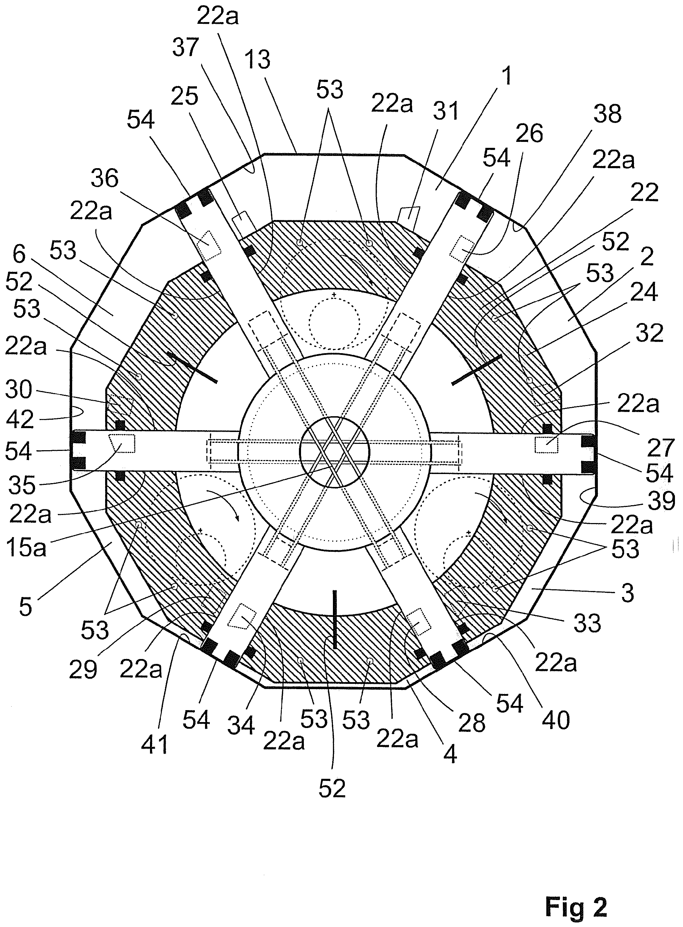

In Fig. 2 ist der Blick freigegeben auf die Gegenseite von Fig. 1. Schraffiert dargestellt ist eine Fläche 24 des Kolbens 22, welche in gleitendem Dauerkontakt steht mit der Wand des Gehäuses 13 und daher schmierbedürftig ist. In der Fläche 24 des Kolbens 22 und in radialen Nuten 22a sind in regelmässigen Abständen Öffnungen 53 für frisches Schmieröl angebracht, welches unter Druck dosiert eingebracht wird. Durch die Oszillationsbewegung des Kolbens 22 gibt dieser oder die Teilflügel 15 - 20 im Takt dieser Bewegung nacheinander frei die zum Teil verdeckten, also gestrichelt dargestellten, Ein-und Auslassöffnungen 25 - 30 und 31 - 36 der Brennräume 1 - 6.
Die Teilflügel 15 - 20 der drei Doppelflügel sind je paarweise starr miteinander verbunden durch wahlweise Stangen oder Leisten 15a. Diese sind axial zur Achse des Motors gegeneinander versetzt, so dass die Bewegung der Doppelflügel ungehindert erfolgen kann.

Die vier Takte eines Otto- bzw. Dieselmotors werden anschliessend anhand der Brennräume 1 - 6 beschrieben:

| | |
|---|---|
| Brennraum 1: | Einlassöffnung 25 und Auslassöffnung 31 sind geöffnet. Die unter Druck stehende Frischluft strömt durch die Einlassöffnung 25 in den Brennraum 1, verdrängt das im Brennraum 1 befindliche und verbrannte Gemisch; gleichzeitig wird der Brennraum 1 mit Frischluft neu beladen. |
| Brennraum 2: | Einlassöffnung 26 und Auslassöffnung 32 sind geschlossen; das Volumen von Brennraum 2 wird verkleinert. |

| | |
|---|---|
| Brennraum 3: | Beide Öffnungen 27 und 33 sind weiterhin geschlossen; das Volumen des Brennraumes 3 wird weiterhin verkleinert. |
| Brennraum 4: | Der Inhalt von Brennraum 4 ist maximal komprimiert. Je nach Motortyp Otto/Diesel-Motor wird nun der Brennstoff eingespritzt und danach die Zündung eingeleitet. Zünd-oder Glühkerzen sind nicht eingezeichnet, da deren Ort von konstruktiven Massnahmen beeinflusst werden kann. |
| Brennraum 5, 6: | Arbeitstakt: Dieser hat unmittelbar nach dem Zündvorgang begonnen und erstreckt sich bis wiederum in den Brennraum 1. Da der Kolben 22 keinen Stillstand und damit auch keinen Totpunkt aufweist, kann der Arbeitstakt zwanglos verlängert werden; damit steigt die Energie-Nutzung des Brennstoffs und sinkt der Schadstoff-Ausstoss. Die Expansion der Verbrennungsgase schreitet fort. Einlassöffnung 30 öffnet für Frischluft; die Nachverbrennung wird eingeleitet. |

Was hier für Brennräume 1 - 6 nacheinander beschrieben ist, findet jedoch gleichzeitig statt, zeitlich gestaffelt, in den Brennräumen 1 - 6.
Um zu verhindern, dass Rückzündungen von einem Brennraum in den vorangehenden erfolgen können, sind die Auspuffleitungen der Brennräume 1, 3, 5 und jene der Brennräume 2, 4, 6 jeweils auf separate Auspuffrohre gelegt.
Die erwähnte Injektion des Treibstoffs erfolgt durch Injektionspumpen gemäss dem Stande der Technik. Der Start des Motors erfolgt durch Druckluft aus dem Druckluft-Reservoir, zunächst ohne Injektion von Treibstoff, bis der Motor eine Drehzahl erreicht hat, bei der er selbständig weiterlaufen kann.

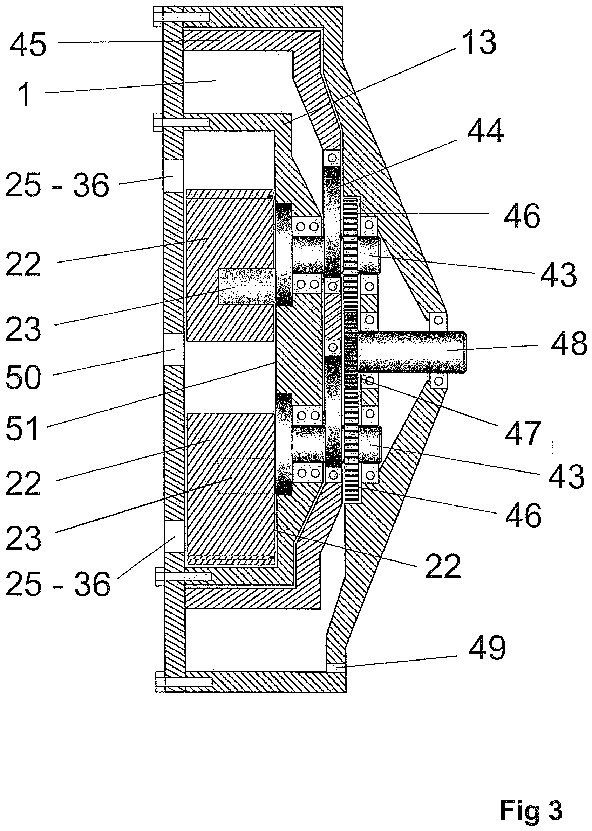

Fig. 3 zeigt einen Axial-Schnitt durch den Kolben 22, welcher nur funktional einen Kolben darstellt, von der Form her durch eine hier zwölfeckige Scheibe gebildet ist. Diese Scheibe, genannt Kolben 22, schwingt, geführt von den drei Kurbelwellen 23 während der vier Taxte jedes Brennraumes 1 - 6, einmal um 360°und nimmt die drei im Kolben 22 in Nuten 22a eingelassenen Doppelflügel 15 - 20 seitlich mit, so dass diese die Schwingbewegung des Kolbens nur in einer Projektion mitmachen auf jene Seite des Motorinnenraums, auf welcher die Doppelflügel 15 - 20 jeweils senkrecht stehen.
Die drei Satellitenräder 46, auf welchen die drei Kurbelwellen 23 je fest aufsitzen, sind im Dauereingriff mit einem Sonnenrad 47, welches seinerseits auf einer Hauptwelle 48 fest aufsitzt. Diese Hauptwelle 48 ist die Abtriebsachse des erfindungsgemässen Motors.
Die äusseren Enden der Doppelflügel 15 - 20 werden während dieses einen Umlaufs des Kolbens 22 über die ganze Länge von Teilseiten 37 - 43 des Innenraumes hinwegbewegt, und dichten mit eingelegten Dichtleisten 21a zusammen mit den in Längsrichtung der Teilflügel eingelassenen Dichtleisten 21 die Brennräume 1 - 6 gegeneinander ab. Die im Kolben 22 radial verlaufenden Dichtleisten 14, zusammen mit den quer zum Motor liegenden Dichtleisten 14a, dichten die Brennräume 1 - 6 zum Motorzentrum hin ab.
Die Schmierung erfolgt durch einen Ölnebel, welcher durch die unter Druck einströmende Frischluft erzeugt und transportiert wird. Da in den Brennräumen 1 - 6 immer Überdruck herrscht, kann kein Schmieröl in diese Brennräume gelangen. Wegen einer unvermeidlichen Leckluftströmung, wird der Ölnebel von allen Brennräumen her in das Zentrum des Motors gedrängt, von wo er durch eine Öffnung 50 abgesaugt wird und einem Behälter für recycliertes Öl zugeführt wird zur neuerlichen Verwendung. Seitlich eingegebenes Schmieröl wird nach der Schmierung des Motors zu einem Leckluftölnebel vermischt und vom nachfolgenden Kompressor für die Durchlaufschmierung abgesaugt und für die Wiederverwendung im Druckluftbehälter getrennt.

Hier ist auch gezeigt, wie der Massenausgleich gehandhabt wird: Den Antriebsanteil des Motors umgebend, ist eine schalenförmige Struktur. Dies ist eine Ausgleichsmasse 45, angetrieben durch Satellitenräder 46 und Exzenterscheiben 44. Damit kann der Motor nicht nur ins statische, sondern auch ins dynamische Gleichgewicht gebracht werden. Die radiale Ausrichtung der Ausgleichsmasse 45 ist jener des Kolbens 22 durch die Stellung der Exzenterscheiben 44 immer genau entgegengesetzt. Da jede der kreisförmig bewegen Massen, nämlich jene des Kolbens 22 und die des nicht zentralen Anteils der Ausgleichsmasse 45 für sich immer gleich gross sind, und überdies deren Abstände vom Zentrum einer Hauptwelle 48 konstant sind, ergibt sich je ein konstantes Trägheitsmoment. Womit das dynamische Gleichgewicht gegeben ist; allfällige Abweichungen herstellerischer Natur können durch punktuelles Nachbearbeiten behoben werden. Dies fällt umso leichter, als die Schale der Ausgleichsmasse 45, ausser in ihrem Mittelteil, keine anderen Teile des Motors irgendwo berührt. Grundsätzlich wird der erfindungsgemässe Motor durch die Ölnebel-befeuchtete Frischluft geschmiert. Dafür wird die Frischluft in einem Kompressor verdichtet und vor der Abgabe in den Motor mit Schmieröl in Form eines Ölnebels angereichert. Eine Trennwand 51 sorgt für die Trennung der Schmiersysteme im Bereich des Motors. Die Fläche 24 des Kolbens 22 ist grundsätzlich schmierbedürftig, da im Dauerkontakt mit dem Kolben 22 und den Teilflügeln 15 - 20; ebenso die Seitenflächen und die Stirnflächen der Doppelflügel 15 - 20. Kanäle 52 sammeln das lokal überschüssige Öl zum Neu-verteilen im Bereich des Kolbens 22. Das überschüssige Öl wird abgeleitet, filtriert, und einem Behälter für recycliertes Öl zugeleitet. Von da kann es wiederverwendet werden.
Weitere Vorzüge des erfindungsgemässen Motors sind:
- alle Gleitflächen sind eben: herstellungsmässig einfach,
- keine Ventile,
- einfache und genaue Steuerung der Ein- und Auslassöffnungen durch spielfreies Übergleiten durch die Kolben- und Flügelseitenflächen,
- der erfindungsgemässe Motor weist keine kalt-und Warmzonen auf; die Wärmeentwicklung ist rundum gleichmässig verteilt,
- statisches und dynamisches Gleichgewicht der bewegten Teile des Motors,
- keine Triebwerksüberlastung durch Totpunkte, daher können Auslassöffnungen später geöffnet werden,
- die Ausgangsdrehzahlen lassen sich durch die Grösse der Satellitenräder konstruktiv anpassen.
- keine Kolben-Wechselbelastung dank Kammerdauerüberdruck,
- Motor wird mit Druckluft gestartet.

## Patentansprüche

1. Schwingkolbenmotor mit vieleckförmigem Kolben (22), einem im Axialschnitt des Innenraums regelmässig polygonalem Gehäuse (13) derselben Form, wie der Kolben (22), **dadurch gekennzeichnet, dass**
- er eine Hauptwelle (48) aufweist, auf welcher ein Sonnenrad (47) fest aufsitzt und seinerseits drei Satellitenräder (46) antreibt, auf welchen je eine Kurbelwelle (23) sitzt, welche den Kolben (22) in eine kreisförmig schwingende Bewegung mit Parallelführung um die Hauptwelle (48) versetzt, und welche Hauptwelle (48) die Abtriebswelle des Schwingkolbenmotors darstellt,
- der polygonale Innenraum des Gehäuses (13) funktional in sechs Brennräume (1 - 6), das heisst in einen ersten Brennraum (1), einen zweiten Brennraum (2), einen dritten Brennraum (3), einen vierten Brennraum (4) einen fünften Brennraum (5) und einen sechsten Brennraum (6), unterteilt ist,
- für jeden Brennraum (1 - 6) je eine Einlass-(25 - 30) und eine Auslassöffnung (31 - 36) vorhanden ist, das heisst,
eine erste Einlassöffnung (25) und eine erste Auslassöffnung (31) für den ersten Brennraum (1), eine zweite Einlassöffnung (26) und eine zweite Auslassöffnung (32) für den zweiten Brennraum (2), eine dritte Einlassöffnung (27) und eine dritte Auslassöffnung (33) für den dritten Brennraum (3), eine vierte Einlassöffnung (28) und eine vierte Auslassöffnung (34) für den vierten Brennraum (4), eine fünfte Einlassöffnung (29) und eine fünfte Auslassöffnung (35) für den fünften Brennraum (5), sowie eine sechste Einlassöffnung (30) und eine sechste Auslassöffnung (36) für den sechsten Brennraum (6),
- drei einander überkreuzende Doppelflügel mit Teilflügeln(15 - 20) vorhanden sind, welche in passenden radiale Nuten (22a) des Kolbens (22) jeder für sich längs gleitend verschieblich ist, und welche den polygonalen Innenraum des Gehäuses (13) in tangentialer Richtung mittels Dichtleisten (21) abdichten, wobei die beiden Teilflügel eines der Doppelflügel (15 - 20) jeweils durch im Wesentlichen radial verlaufende Stangen (15a, 17a, 19a) verbunden sind,
- der Kolben (22) in jedem Brennraum (1 - 6) in einer tangentiell umlaufenden Nut (14a) eine Dichtleiste (14) führt, welche den Brennraum (1 - 6) radial nach innen dichtet, und
- eine schalenförmige Ausgleichsmasse (45) vorhanden ist und den Antriebsteil des Motors umgibt und durch drei Exzenterscheiben (44) beweglich ist, welche so eingerichtet sind, dass sie Exzentrizität des Kolbens (22) statisch und dynamisch in jeder Lage des Kolbens (22) auszugleichen vermögen.

2. Schwingkolbenmotor nach Patentanspruch 1, **dadurch gekennzeichnet, dass**
- eine Druckluftversorgung vorhanden ist, welche den Motor mit Oelnebel-befeuchteter Druckluft versorgt, so dass alle beweglichen Teile und ihre Gleitflächen immer geschmiert aufeinander laufen, das unverbrauchte Schmieröl in mehreren Kanälen (52) zusammenlaufen kann, von wo es durch den Kolben (22) erneut verteilt wird.

3. Schwingkolbenmotor nach Patentanspruch 1, **dadurch gekennzeichnet, dass** der Schwingkolbenmotor so ausgebildet ist, dass für jeden einzelnen Brennraum der sechs Brennräume (1 - 6) konsekutiv folgende Schritte ausführbar sind:
Erster Brennraum (1): Die erste Einlassöffnung (25) und die erste Auslassöffnung (31) sind geöffnet, die unter Druck stehende Frischluft strömt durch die erste Einlassöffnung (25) in den ersten Brennraum (1), verdrängt das im ersten Brennraum (1) befindliche und verbrannte Gemisch und kann eine Nachverbrennung ermöglichen; anschliessend wird der erste Brennraum (1) mit Frischluft neu beladen,
Zweiter Brennraum (2): zweite Auslassöffnung (32) und etwas später die zweite Einlassöffnung (26) sind geschlossen; in diesem Zwischenzeitraum fliesst noch Frischluft unter Druck in das Volumen des zweiten Brennraums (2); das Volumen wird verkleinert; die Verdichtung beginnt,
Dritter Brennraum (3): beide Öffnungen, die dritte Einlassöffnung (27) und die dritte Auslassöffnung (33) sind weiterhin geschlossen; das Volumen wird weiter verkleinert,
Vierter Brennraum (4): der Inhalt des vierten Brennraums (4) ist maximal komprimiert; der Treibstoff wird injiziert; nun wird die Zündung eingeleitet,
Fünfter und sechster Brennraum (5, 6): die Expansion der Verbrennungsgase schreitet fort; die sechste Auslassöffnung (36) öffnet, um den Auspuffdruck abzubauen, kurz darauf öffnet die sechste Einlassöffnung (30) für Druckluft; die Nachverbrennung wird eingeleitet.

4. Schwingkolbenmotor nach Patentanspruch 1, **dadurch gekennzeichnet, dass**
- die Auslassöffnungen (31 - 36) der Brennräume (1 - 6) so auf zwei Auspuffrohre gelegt sind, dass die erste, zweite und dritte Auslassöffnung (31 - 33) auf das eine, die vierte, fünfte und sechste Auslassöffnung (34 - 36) auf das andere gelegt sind, um Rückzündungen zu vermeiden.

## Claims

1. Oscillating piston engine having a polygonal piston (22), a housing (13) which has the same shape as the piston (22) and is regularly polygonal in axial section of the interior, **characterized in that**
- it has a main shaft (48), on which a sun gear (47) is firmly seated and in turn drives three satellite gears (46), on each of which a crankshaft (23) is seated, which sets the piston (22) in a circularly oscillating movement with parallel guidance about the main shaft (48), and which main shaft (48) represents the output shaft of the oscillating piston engine,
- the polygonal interior of the housing (13) is functionally divided into six combustion chambers (1-6), i.e. into a first combustion chamber (1), a second combustion chamber (2), a third combustion chamber (3), a fourth combustion chamber (4), a fifth combustion chamber (5) and a sixth combustion chamber (6),
- an inlet opening (25-30) and an outlet opening (31-36) are provided for each combustion chamber (1-6), i.e. a first inlet opening (25) and a first outlet opening (31) for the first combustion chamber (1), a second inlet opening (26) and a second outlet opening (32) for the second combustion chamber (2), a third inlet opening (27) and a third outlet opening (33) for the third combustion chamber (3), a fourth inlet opening (28) and a fourth outlet opening (34) for the fourth combustion chamber (4), a fifth inlet opening (29) and a fifth outlet opening (35) for the fifth combustion chamber (5), and a sixth inlet opening (30) and a sixth outlet opening (36) for the sixth combustion chamber (6),
- three mutually crossing double wings with partial wings (15-20) are present, which are each slidably displaceable longitudinally in matching radial grooves (22a) of the piston (22), and which seal the polygonal interior of the housing (13) in the tangential direction by means of sealing strips (21), wherein the two partial wings of one of the double wings (15-20) are each connected by substantially radially extending rods (15a, 17a, 19a),
- the piston (22) in each combustion chamber (1-6) guides a sealing strip (14) in a tangentially circumferential groove (14a) which seals the combustion chamber (1-6) radially inwards, and
- a shell-shaped compensating mass (45) is present and surrounds the driving part of the engine and is movable by three eccentric discs (44) which are set up such that they are capable of compensating eccentricity of the piston (22) statically and dynamically in any position of the piston (22).

2. Oscillating piston engine according to claim 1, **characterized in that**
- a compressed air supply is provided, which supplies the engine with oil-mist-humidified compressed air, so that all moving parts and their sliding surfaces always run lubricated on each other, the unused lubricating oil can run together in several channels (52), from where it is again distributed by the piston (22).

3. Oscillating piston engine according to claim 1, **characterized in that** the oscillating piston engine is designed such that the following steps can be carried out consecutively for each individual combustion chamber of the six combustion chambers (1-6) :
First combustion chamber (1): the first inlet opening (25) and the first outlet opening (31) are open, the pressurized fresh air flows through the first inlet opening (25) into the first combustion chamber (1), displaces the burned mixture located in the first combustion chamber (1) and can enable afterburning; the first combustion chamber (1) is then reloaded with fresh air,
Second combustion chamber (2): second outlet opening (32) and slightly later the second inlet opening (26) are closed; in this intermediate period fresh air still flows under pressure into the volume of the second combustion chamber (2); the volume is reduced; compression begins,
Third combustion chamber (3): both openings, the third inlet opening (27) and the third outlet opening (33) remain closed; the volume is further reduced,
Fourth combustion chamber (4): the contents of the fourth combustion chamber (4) are maximally compressed; the fuel is injected; ignition is now initiated,
Fifth and sixth combustion chambers (5, 6): the expansion of the combustion gases continues; the sixth outlet opening (36) opens to reduce the exhaust pressure, shortly after that the sixth inlet opening (30) opens for compressed air; afterburning is initiated.

4. Oscillating piston engine according to claim 1, **characterized in that**
- the outlet openings (31-36) of the combustion chambers (1-6) are laid on two exhaust pipes in such a way that the first, second and third outlet openings (31-33) are laid on the one, the fourth, fifth and sixth outlet openings (34-36) on the other in order to avoid re-ignitions.

## Revendications

1. Moteur à piston oscillant comprenant un piston polygonal (22), un carter polygonal (13), régulier en coupe axiale de l'espace intérieur, de la même forme que le piston (22), **caractérisé en ce que**
- il présente un arbre principal (48) sur lequel repose fixement une roue solaire (47) et entraîne de son côté trois pignons satellites (46), sur chacun desquels repose un vilebrequin (23) qui déplace le piston (22) dans un mouvement oscillant circulaire avec guidage parallèle autour de l'arbre principal (48), lequel arbre principal (48) représente l'arbre de sortie du moteur à piston oscillant,
- l'espace intérieur polygonal du carter (13) est divisé fonctionnellement en six chambres de combustion (1-6), c'est-à-dire en une première chambre de combustion (1), une deuxième chambre de combustion (2), une troisième chambre de combustion (3), une quatrième chambre de combustion (4), une cinquième chambre de combustion (5) et une sixième chambre de combustion (6),
- pour chaque chambre de combustion (1-6) il y a un orifice d'admission (25-30) et un orifice de sortie (31-36), ce qui signifie un premier orifice d'admission (25) et un premier orifice de sortie (31) pour la première chambre de combustion (1), un deuxième orifice d'admission (26) et un deuxième orifice de sortie (32) pour la deuxième chambre de combustion (2), un troisième orifice d'admission (27) et un troisième orifice de sortie (33) pour la troisième chambre de combustion (3), un quatrième orifice d'admission (28) et un quatrième orifice de sortie (34) pour la quatrième chambre de combustion (4), un cinquième orifice d'admission (29) et un cinquième orifice de sortie (35) pour la cinquième chambre de combustion (5), et un sixième orifice d'admission (30) et un sixième orifice de sortie (36) pour la sixième chambre de combustion (6),
- il y a trois doubles ailettes agencées en entrecroisement avec des ailettes partielles (15-20), chacune d'elle coulissant dans le sens longitudinal dans des rainures radiales adaptées (22a) du piston (22) et venant étanchéifier à l'aide de baguettes d'étanchéité (21) l'espace intérieur polygonal du carter (13) dans la direction tangentielle, les deux ailettes partielles de l'une des doubles ailettes (15-20) étant raccordées par des tiges (15a, 17a, 19a) s'étendant essentiellement de façon radiale,
- le piston (22) dans chaque chambre de combustion (1-6) guide dans une rainure circulaire tangentielle (14a) une baguette d'étanchéité (14) qui vient étanchéifier la chambre de combustion (1-6) radialement vers l'intérieur, et
- une masse d'équilibrage (45) en forme de cuvette est présente et entoure la partie d'entraînement du moteur et est mobile par trois disques d'excentrique (44) qui sont disposés de telle façon qu'ils permettent d'équilibrer l'excentricité du piston (22) statiquement et dynamiquement dans chaque position du piston (22).

2. Moteur à piston oscillant selon la revendication 1, **caractérisé en ce que**
- il y a une alimentation en air comprimé qui alimente le moteur en air comprimé humidifié au brouillard d'huile, de sorte que toutes les pièces mobiles et leurs surfaces de glissement tournent les unes contre les autres toujours lubrifiées, l'huile lubrifiante non utilisée pouvant converger dans plusieurs canaux (52) d'où elle est de nouveau répartie par le piston (22).

3. Moteur à piston oscillant selon la revendication 1, **caractérisé en ce que** le moteur à piston oscillant est conçu de sorte que pour chacune des six chambres de combustion (1-6) il puisse être réalisé consécutivement les étapes suivantes :
Première chambre de combustion (1) : le premier orifice d'admission (25) et le premier orifice de sortie (31) sont ouverts, l'air frais comprimé s'écoule à travers le premier orifice d'admission (25) dans la première chambre de combustion (1), chasse le mélange brûlé qui se trouve dans la première chambre de combustion (1) et peut permettre une postcombustion ; la première chambre de combustion (1) se retrouve de ce fait remplie d'air frais,
Deuxième chambre de combustion (2) : le deuxième orifice de sortie (32) et un peu plus tard le deuxième orifice d'admission (26) sont fermés ; durant cette période intermédiaire, de l'air frais s'écoule encore sous pression dans le volume de la deuxième chambre de combustion (2) ; le volume diminue ; la compression commence,
Troisième chambre de combustion (3) : les deux orifices, le troisième orifice d'admission (27) et le troisième orifice de sortie (33) sont encore fermés ; le volume diminue encore,
Quatrième chambre de combustion (4) : le contenu de la quatrième chambre de combustion (4) est comprimé au maximum ; on injecte le carburant ; on peut lancer l'allumage,
Cinquième et sixième chambre de combustion (5, 6) : l'expansion des gaz de combustion se poursuit ; le sixième orifice de sortie (36) s'ouvre pour réduire la pression d'échappement, peu après le sixième orifice d'admission (30) s'ouvre pour l'air comprimé ; on entame la postcombustion.

4. Moteur à piston oscillant selon la revendication 1, **caractérisé en ce que**
- les orifices de sortie (31-36) des chambres de combustion (1-6) sont situés sur deux tuyaux d'échappement, de sorte que le premier, le deuxième et le troisième orifice de sortie (31-33) sont positionnés sur un tuyau et que le quatrième, le cinquième et le sixième orifice d'admission (34-36) sont positionnés sur l'autre tuyau pour éviter des retours.
